(19) **Europäisches Patentamt / European Patent Office / Office européen des brevets**

(11) **EP 3 168 997 B1**

(12) **EUROPEAN PATENT SPECIFICATION**

(45) Date of publication and mention
of the grant of the patent:
**06.06.2018  Bulletin 2018/23**

(51) Int Cl.:
**H04B 3/32** *(2006.01)*     **H04B 3/487** *(2015.01)*

(21) Application number: **15306801.0**

(22) Date of filing: **13.11.2015**

(54) **METHOD AND APPARATUS FOR MULTI-OPERATOR VECTORING**

VERFAHREN UND VORRICHTUNG ZUR MEHRFACHBETREIBERVEKTORISIERUNG

PROCÉDÉ ET APPAREIL POUR VECTORISER UN MULTI-OPÉRATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.05.2017  Bulletin 2017/20**

(73) Proprietor: **Alcatel Lucent
91620 Nozay (FR)**

(72) Inventors:
• **NUZMAN, Carl
Murray Hill, NJ 07974-0636 (US)**
• **MAES, Jochen
2018 Antwerpen (BE)**

• **COOMANS, Werner
2018 Antwerp (BE)**

(74) Representative: **Nokia Bell Patent Attorneys
Copernicuslaan 50
2018 Antwerp (BE)**

(56) References cited:
**US-A1- 2011 150 057**

• **Colmegna ET AL: "Methods for Supporting
Vectoring when Multiple Service Providers Share
the Cabinet Area", , 1 April 2012 (2012-04-01),
XP055095498, Retrieved from the Internet:
URL:http://www.assia-inc.com/technology/kn
owledge-center/white-papers/FASTWEB-ASSIA
_ White_Paper_on_Vectoring_(April 2012).pdf
[retrieved on 2014-01-09]**

**Description**

**Technical Field of the Invention**

The present invention relates to crosstalk mitigation within a wired communication system.

**Technical Background of the Invention**

crosstalk (or inter-channel interference) is a major source of channel impairment for wired communication systems, such as Digital Subscriber Line (DSL) communication systems.

As the demand for higher data rates increases, systems are evolving toward higher frequency bands, wherein crosstalk between neighboring transmission lines (that is to say transmission lines that are in close vicinity over part or whole of their length, such as twisted copper pairs in a cable binder) is more pronounced (the higher frequency, the more coupling).

Different strategies have been developed to mitigate crosstalk and to maximize effective throughput, reach and line stability. These techniques are gradually evolving from static or dynamic spectrum management techniques to multi-user signal coordination.

One technique for mitigating crosstalk is joint signal precoding: the transmit data symbols are jointly passed through a precoder before being transmitted over the respective communication channels. The precoder is such that the concatenation of the precoder and the communication channels results in little or no inter-channel interference at the receivers.

A further technique for mitigating crosstalk is joint signal postcoding (or post-processing): the receive data symbols are jointly passed through a postcoder before being detected. The postcoder is such that the concatenation of the communication channels and the postcoder results in little or no inter-channel interference at the detectors. Postcoders are also sometimes referred to as crosstalk cancellation filters.

Signal precoding is particularly appropriate for downstream communication (toward customer premises), while signal postcoding is particularly appropriate for upstream communication (from customer premises). Either technique will be referred to as signal vectoring hereinafter.

More formally, an NxN Multiple Input Multiple Output (MIMO) channel can be described by the following linear model:

$$\mathbf{y}_k = \mathbf{H}_k\mathbf{x}_k + \mathbf{z}_k \quad (1),$$

wherein the N-component complex vector $\mathbf{x}_k$, respectively $\mathbf{y}_k$, is a discrete frequency representation, as a function of the frequency index k, of the symbols transmitted over, respectively received from, the N vectored channels, wherein the NxN complex matrix $\mathbf{H}_k$ is the channel matrix: the (i,j)-th component $H_{ij}$ of the channel matrix $\mathbf{H}_k$ describes how the communication system produces a signal on the i-th channel output in response to a signal being fed to the j-th channel input; the diagonal elements of the channel matrix describe direct channel coupling, and the off-diagonal elements of the channel matrix (also referred to as the crosstalk coefficients) describe inter-channel coupling, and wherein the N-component complex vector $\mathbf{z}_k$ denotes additive noise over the N channels, such as Radio Frequency Interference (RFI) or thermal noise.

Linear signal precoding and postcoding are advantageously implemented by means of matrix products.

In downstream, the linear precoder performs a matrix-product in the frequency domain of a transmit vector $\mathbf{u}_k$ with a precoding matrix $\mathbf{P}_k$ before actual transmission over the respective communication channels, i.e. actual transmit vector is $\mathbf{x}_k = \mathbf{P}_k\mathbf{u}_k$ in eq. (1), the precoding matrix $\mathbf{P}_k$ being such that the overall channel matrix $\mathbf{H}_k\mathbf{P}_k$ is diagonalized, meaning the off-diagonal coefficients of the overall channel $\mathbf{H}_k\mathbf{P}_k$, and thus the inter-channel interference, mostly reduce to zero.

Practically, and as a first order approximation, the precoder superimposes anti-phase crosstalk pre-compensation signals over the victim line along with the direct signal that destructively interfere at the receiver with the actual crosstalk signals from the respective disturber lines.

In upstream, the linear postcoder performs a matrix-product in the frequency domain of the receive vector $\mathbf{y}_k$ with a postcoding matrix $\mathbf{Q}_k$ to recover the transmit vector $\mathbf{u}_k$ (after channel equalization and power normalization), i.e. detection is performed on $\mathbf{y'}_k = \mathbf{Q}_k\mathbf{y}_k$, the postcoding matrix $\mathbf{Q}_k$ being such that the overall channel matrix $\mathbf{Q}_k\mathbf{H}_k$ is diagonalized, meaning the off-diagonal coefficients of the overall channel $\mathbf{Q}_k\mathbf{H}_k$, and thus the inter-channel interference, mostly reduce to zero.

Signal vectoring is typically performed at a traffic aggregation point as vectoring primarily implies that data symbols concurrently transmitted over, or received from, the vectored channels are bunched all together and synchronously passed through the precoder or postcoder. For instance, signal vectoring is advantageously performed within a Digital subscriber Line Access Multiplexer (DSLAM) deployed at a central office (co), or as a fiber-fed remote unit closer to subscriber premises (street cabinet, pole cabinet, building cabinet, etc).

The choice of the vectoring group, that is to say the set of communication lines the signals of which are jointly processed, is rather critical for achieving good crosstalk mitigation performances. within a vectoring group, each communication line is considered as a disturber line inducing crosstalk into the other communication lines of the group, and the same communication line is considered as a victim line incurring crosstalk from the other communication lines of the group. Crosstalk from lines that do not belong to the vectoring group is treated as alien noise and is not canceled.

Ideally, the vectoring group should match the whole set of communication lines that physically and noticeably interfere with each other. Yet, national regulation policies and/or limited vectoring capabilities may prevent such an exhaustive approach, in which case the vectoring group would only include a sub-set of the interfering lines, thereby yielding limited vectoring gains.

For instance, regulators in certain countries require to have Sub-Loop Unbundling (SLU), whereby a new telecommunication provider company known as the Competitive Local Exchange Carrier (CLEC) is granted physical access to the copper plant, and is allowed to install its own network equipment alongside the network equipment of the Incumbent Local Exchange Carrier (ILEC). In this deployment model, the lines of different operators, which typically share the same cable or cable binder, are connected to different network equipment that are not coordinated. The resulting vectoring gains are reduced and can be as low as 5 to 10% depending on the crosstalk levels of the alien disturbers.

In some countries, SLU has been omitted in case of vectoring deployments. Instead the ILEC or any designated operator supplies an access to the subscriber's individual Layer 2 (L2) or Layer 3 (L3) bit streams at one or more central aggregation points. The other operators connect to the aggregation points and pick up the relevant bit streams from their respective subscribers. This is by far the most straightforward solution for vectoring deployments.

In other countries, SLU is already effective in field deployments. So there are some incentives for enabling cross-DSLAM vectoring, aka Multi-operator Vectoring (MOV), while allowing operators to use their own equipment suppliers. Different options exist for this scenario.

The first option is to exchange frequency-domain samples between DSLAMs. This real-time data path consists of the inputs and outputs of a frequency-domain precoder (downstream) and postcoder (upstream).

Three main technical challenges need to be addressed with this scheme:

- The tone data exchange requires very high bandwidth, of the same order as the total line rates of all communication lines terminated at the access node.
- The currently proprietary vectoring data path implementations must be tightly synchronized, not just at the symbol level in the time-domain, but also internally in the frequency-domain processing.
- A complex standard would be required to facilitate interoperability between different equipment vendors. Many aspects of vendor's internal vectoring state machine (transitions between different initialization phases for example) need to be aligned.

A second option is based on Dynamic Spectrum Management (DSM). In this approach, two or more DSLAMs jointly optimize their power spectrum to reduce the impact of crosstalk. Synchronization at symbol level is required to avoid inter-carrier interference. This approach is much less expensive and risky, but also has limited rate performance (e.g., 60% of the vectored data rate), and may require CPE upgrade to allow dynamic control of the downstream frequency spectrum.

The following background art, which may be regarded as useful for understanding the present invention and its relationship to the prior art, is further acknowledged and briefly discussed.

The US patent application entitled "*Monitoring Non-Managed Wire Pairs to Improve Dynamic Spectrum Management Performance*" filed on December 17, 2009, and published on June 23, 2011 with publication number US 2011/0150057 A1, discloses a DSL network providing enhanced DSM based on estimated foreign interference obtained from monitoring unmanaged wire pairs in a cable. A DSLAM or other line terminal provides vectored DSL signaling to a plurality of subscribers via a first set of wire pairs of the cable. The DSLAM monitors a second set of one or more wire pairs of the cable that are not connected to the vectored group associated with the first set of wire pairs to estimate foreign interference introduced to the first set of wire pairs. The DSLAM then modifies the vectored DSL transmitted signaling responsive to the estimated foreign interference so as to pre-cancel or otherwise compensate for the foreign interference introduced into the managed wire pairs.

## Summary of the Invention

It is an object of the present invention, in the event of multiple access nodes sharing a common access plant, to propose an effective vectoring scheme with minimum coordination between the access nodes that achieves almost full vectoring gains.

In accordance with a first aspect of the invention, a method for deploying broadband communication services over an access plant comprises coupling one or more first subscriber lines of the access plant to respective first line termination ports of a first access node; coupling one or more second subscriber lines of the access plant to respective second line termination ports of a second access node; coupling third line termination ports of the first access node to the respective second subscriber lines. The method further comprises, by the first access node, mitigating first downstream crosstalk caused by first downstream communication signals transmitted over the first subscriber lines and impairing second downstream communication signals transmitted over the second subscriber lines. The mitigation of the first downstream crosstalk comprises transmitting first crosstalk pre-compensation signals through the third line termination ports.

In one embodiment of the invention, respective ones of the second line termination ports, respective ones of the third line termination ports, and respective ones of the second subscriber lines are coupled to each other by means of analog couplers.

In a further embodiment of the invention, the analog couplers are symmetric couplers with high-isolation coupling paths between the second and third line termination ports, and with equal-attenuation coupling paths between the second line termination ports and the second subscriber lines and between the third line termination ports and the second subscriber lines.

In still a further embodiment of the invention, the analog couplers are asymmetric couplers with high-isolation coupling paths between the second and third line termination ports, and with lower-attenuation coupling paths between the second line termination ports and the second subscriber lines than between the third line termination ports and the second subscriber lines.

In one embodiment of the invention, the method further comprises provisioning a communication port at the first access node configured to receive vectoring control data from the second access node.

In a further embodiment of the invention, the vectoring control data comprise at least one of second downstream error samples measured over the second subscriber lines while first downstream pilot signals are being transmitted over the first subscriber lines; and timing information for time-synchronization of symbols transmitted over the first and second subscriber lines.

In still a further embodiment of the invention, the vectoring control data comprises a second length of second downstream pilot sequences intended for modulation of second downstream pilot signals transmitted over the second subscriber lines. The method further comprises modulating first downstream pilot signals transmitted over the first subscriber lines with a first common downstream pilot sequence having the second length while the second downstream pilot signals modulated with the second downstream pilot sequences are being transmitted over the second subscriber lines, the first common downstream pilot sequence and the second downstream pilot sequences being mutually orthogonal.

For instance, the first common downstream pilot sequence can be a constant pilot sequence, which is typically left unused on account of the inherent bias such constant pilot sequences introduce in the crosstalk estimation process.

In one embodiment of the invention, the first and second line termination ports are assigned to respective subscribers for broadband communication, and the third line termination ports are unassigned ports.

In one embodiment of the invention, the method further comprises transmitting third downstream pilot signals through the third line termination ports for further adjustment of the mitigation of the first downstream crosstalk.

In one embodiment of the invention, the first and second access nodes are deployed at different geographical locations along the access plant.

In accordance with another aspect of the invention, an access node for providing broadband communication services over an access plant comprises one or more first line termination ports to be coupled to respective first subscriber lines of the access plant; one or more third line termination ports to be coupled to respective second subscriber lines of the access plant that are further coupled to respective second line termination ports of a second access node. The access node further comprises a vectoring processor coupled to the first and third line termination ports, and configured to mitigate first downstream crosstalk caused by first downstream communication signals transmitted over the first subscriber lines and impairing second downstream communication signals transmitted over the second subscriber lines. The third line termination ports are configured to transmit first crosstalk pre-compensation signals generated by the vectoring processor for mitigation of the first downstream crosstalk.

Such an access node may for instance refer to a DSLAM deployed at a CO or at a remote location, or to a Distribution Point Unit (DPU).

Embodiments of an access node according to the invention correspond with the embodiments of a method according to the invention.

The present invention proposes that each and every access node sharing a common access plant mitigates the downstream crosstalk caused by its own subscriber lines into the competitor's lines by injecting appropriate pre-compensation signals in the time and analog domains through unassigned line termination ports, which pre-compensation signals being further multiplexed with the competitor's line signals by means of analog couplers, thereby avoiding the need for digital exchange of frequency-domain data.

In addition, these unassigned line termination ports can also be used to pick up the upstream signals traveling over the competitor's lines for cancellation of the upstream crosstalk caused by the competitor's lines into its own subscriber lines.

A low-bandwidth control interface shall be provisioned between the access nodes for symbol synchronization and exchange of the necessary data for determining adequate vectoring coefficients for the respective access nodes.

These unassigned line termination ports shall only accommodate reduced electronics for analog insertion of the crosstalk pre-compensation signals and/or digital sampling of the upstream communication signals. Typically, they are not coupled to any broadband communication means, and the associated high-cost processors can be advantageously omitted. These unassigned line termination ports can be advantageously grouped in a dedicated Printed Board Assembly (PBA) that can be inserted into existing access nodes for MOV support.

The coordinated access nodes can be co-located, e.g. in a common remote cabinet, or can be situated at different geographical locations, e.g. one access node at a CO and another one at a remote location. The present invention is particularly advantageous for the latter as conveying frequency-domain samples as per the prior art over such a large distance may require backhaul links with very high bandwidth (e.g., additional optical fibers), which may be costly and which may introduce unacceptable latency into the frequency-domain processing.

**Brief Description of the Drawings**

The above and other objects and features of the invention will become more apparent and the invention itself will be best understood by referring to the following description of an embodiment taken in conjunction with the accompanying drawings wherein:

- fig. 1 represents an overview of a copper plant with MOV;
- fig. 2 represents further details about an access node as per the present invention;
- fig. 3 and 4 represents two different channel models for the update of the respective precoders;
- fig. 5 and 6 represents two different channel models for the update of the respective postcoders; and
- fig. 7 represents various coupling schemes that can be used for connecting to the shared copper plant.

**Detailed Description of the Invention**

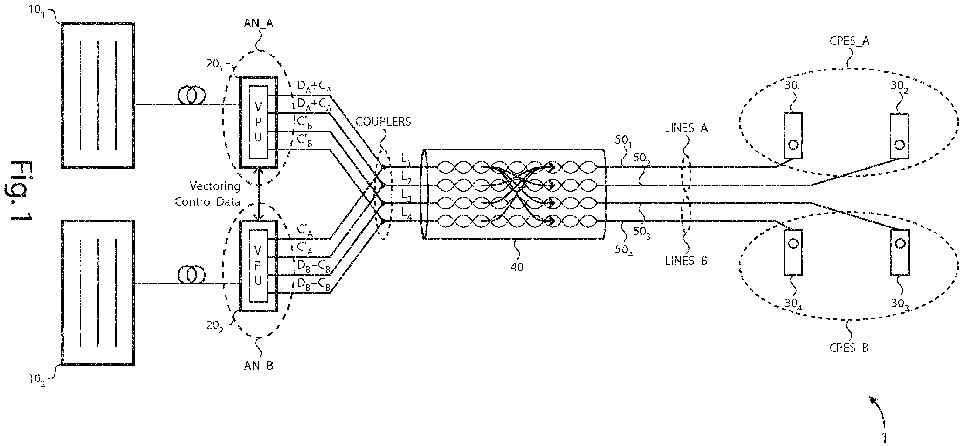

There is seen in fig. 1 the access portion 1 of a broadband communication network. Two operators, namely operator A and operator B, provide broadband communication services to subscribers over a common copper plant.

The copper plant is typically composed of copper Unshielded Twisted Pairs (UTP). Presently, the copper plant comprises four copper pairs or subscriber lines $L_1$ to $L_4$ bounded together within a common segment 40, and next running through dedicated segments 50 for final connection to respective subscriber premises. On account of their close proximity in the common segment 40, the subscriber lines $L_1$ to $L_4$ induce crosstalk into each other (see respective arrows in fig. 1).

Each operator operates its own access node: operator A operates access node $20_1$ denoted as AN_A, and operator B operates access node $20_2$ denoted as AN_B. The access node AN_A is coupled to a first set of CPEs CPES_A through a first set of subscriber lines LINES_A of the copper plant; and the access node AN_B is coupled to a second distinct set of CPEs CPES_B through a second distinct set of subscriber lines LINES_B of the same copper plant. Presently, the access node AN_A is coupled to CPEs $30_1$ and $30_2$ through the subscriber lines $L_1$ and $L_2$; and the access node AN_B is coupled to CPEs $30_3$ and $30_4$ through the subscriber lines $L_3$ and $L_4$.

Each access node accommodates additional line termination ports for connecting to the competitor's subscriber lines. Namely, the access node AN_A is further coupled to the subscriber lines $L_3$ and $L_4$, which are operated by operator B, and conversely the access node AN_B is further coupled to the subscriber lines $L_1$ and $L_2$, which are operated by operator A. A set of passive analog couplers COUPLERS multiplex and demultiplex the signals from/to the respective line termination ports to/from the subscriber lines $L_1$ to $L_4$, acting as combiners for downstream and as splitters for upstream. Thus each of the subscriber lines $L_1$ to $L_4$ is physically coupled to two line termination ports (one for each operator).

Each access node further accommodates a vectoring Processing Unit (VPU) for jointly processing the data symbols that are being transmitted over, or received from, the copper plant in order to mitigate the crosstalk induced in the common segment 40 and to increase the achievable data rates.

Downstream, each access node is responsible for mitigating the crosstalk originating from its own subscriber lines into all the subscriber lines (inc. the competitor's lines). Presently, the access node AN_A mitigates the downstream crosstalk induced by its own subscriber lines $L_1$ and $L_2$ into the subscriber lines $L_1$ to $L_4$, and the access node AN_B mitigates the downstream crosstalk induced by its own subscriber lines $L_3$ and $L_4$ into the subscriber lines $L_1$ to $L_4$. Hence, the access node AN_A generates pre-compensation signals $C_A$ along with direct communication signals $D_A$ over its own subscriber lines $L_1$ and $L_2$, and generates pre-compensation signals $C'_B$ only for further insertion over the competitor's lines $L_3$ and $L_4$; and the access node AN_B generates pre-compensation signals $C_B$ along with direct communication signals $D_B$ over its own subscriber lines $L_3$ and $L_4$, and generates pre-compensation signals $C'_A$ for further insertion over the competitor's lines $L_1$ and $L_2$.

Upstream (not shown), each access node is responsible for mitigating the crosstalk originating from all the subscriber lines into its own subscriber lines. Presently, the access node AN_A mitigates the upstream crosstalk induced by the subscriber lines $L_1$ to $L_4$ into its own subscriber lines $L_1$ and $L_2$, and the access node AN_B mitigates the upstream crosstalk induced by the subscriber lines $L_1$ to $L_4$ into its own subscriber lines $L_3$ and $L_4$. Because of the splitter, each access node has access to the full upstream channel, and can implement the postcoder rows relevant for its users.

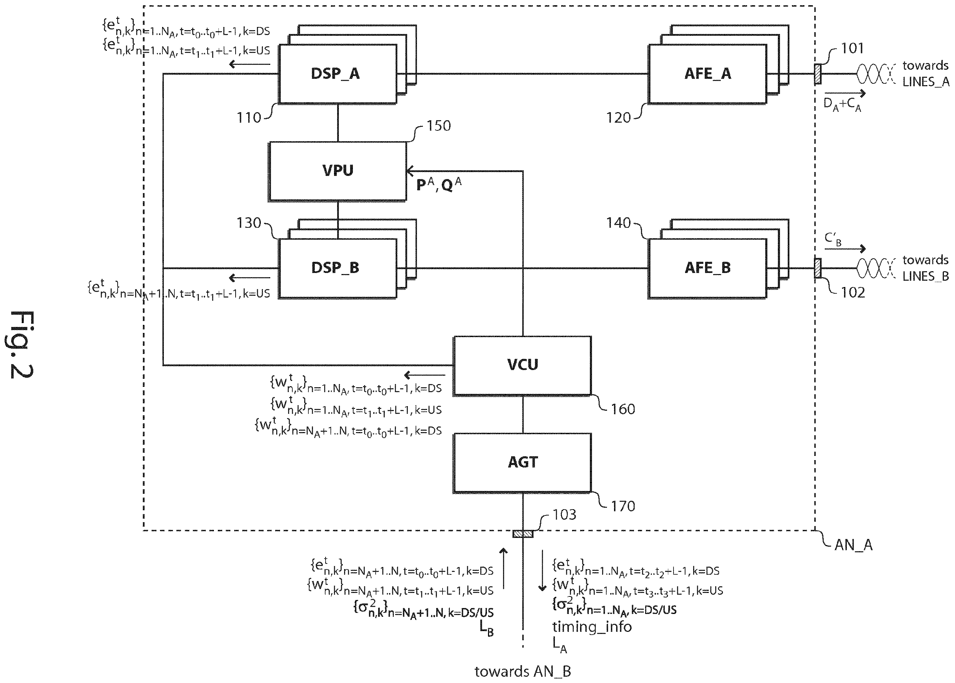

There is seen in fig. 2 further details about an access node as per the present invention, presently the access node AN_A.

The access node AN_A comprises:

- a first set of Digital Signal Processors (DSP) 110 (or DSP_A) with full broadband communication support;
- a first set of Analog Front-Ends 120 (or AFE_4) in one-to-one association with respective ones of the first set of DSPs 110;
- a second set of DSPs 130 (or DSP_B) with a reduced set of functions;
- a second set of AFEs 140 (or AFE_B) in one-to-one association with respective ones of the second set of DSPs 130;
- a Vectoring Processing Unit (VPU) 150 for jointly processing the downstream and upstream Discrete Multi-Tone (DMT) symbols;
- a vectoring Control Unit (VCU) 160 for controlling the operation of the VPU 150; and
- a communication agent 170 (or AGT) for communication with a peer access node, presently the access node AN_B.

The AFEs 120 are coupled to the respective DSPs 110, and the AFEs 140 are coupled to the respective DSPs 130. The DSPs 110 and 130 are further coupled to the VPU 150 and to the VCU 160. The VCU 160 is further coupled to the VPU 150, and to the communication agent 170. The AFEs 120 and 140 are further coupled through line termination ports 101 and 102 to respective subscriber lines. The communication agent 170 is further coupled through a communication port 103 to the peer access node AN_B.

Let $N_A$ and $N_B$ denote the numbers of subscriber lines LINES_A and LINES_B respectively. Let further assume that the lines LINES_A and LINES_B induce crosstalk into each other and form part of the same vectoring group. Let $N=N_{A+NB}$ denote the size of this vectoring group, and let arrange the N vectored lines as $L_1 \ldots L_{NA} L_{NA+1} \ldots L_N$, wherein the subscriber lines LINES_A occupy the first $N_A$ positions, and the subscriber lines LINES_B occupy the last $N_B$ positions.

$N_A$ DSPs 110 and corresponding AFEs 120 shall thus be assigned to respective subscribers for broadband communication over the subscriber lines LINES_A. The $N_A$ AFEs 120 are coupled through $N_A$ respective line termination ports 101 to subscriber lines LINES_A, and further to $N_A$ respective CPEs CPES_A.

In addition, $N_B$ DSPs 130 and corresponding AFEs 140 shall be assigned for MOV support. The $N_B$ AFEs 140 are coupled through $N_B$ respective line termination ports 102 to $N_B$ respective subscriber lines LINES_B operated by the peer access node AN_B, and further to $N_B$ respective CPEs CPES_B.

The AFEs 120 and 140 individually comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.

In case of Frequency Division Duplexing (FDD) operation where downstream and upstream communications operate simultaneously over the same transmission medium in distinct and non-overlapping frequency bands, the AFEs 120 and 140 further comprise a hybrid for coupling the transmitter output to the transmission medium and the transmission medium to the receiver input while achieving low transmitter-receiver coupling ratio. The AFE may further accommodate echo cancellation filters to reduce the coupling ratio at a further extent.

In case of Time Duplexing Division (TDD) operation where downstream and upstream communications operate over the same frequency band but in distinct and non-overlapping time slots, the hybrid can be advantageously omitted as the transmitter and receiver operate in alternate mode: the receive circuitry is switched OFF (or the receive signal is discarded) while the transmit circuitry is active, and the way around, the transmit circuitry is switched OFF while the receive circuitry is active.

The AFEs 120 and 140 further comprise impedance-matching circuitry for adapting to the characteristic impedance of the transmission medium, clipping circuitry for clipping any voltage or current surge occurring over the transmission medium, and isolation circuitry (typically a transformer) for DC-isolating the transceiver from the transmission medium.

The DSPs 110 are configured to operate downstream and upstream broadband communication channels for conveying user traffic over the subscriber lines $L_1$ to $L_N$.

The DSPs 110 are further configured to operate downstream and upstream control channels that are used to transport control traffic, such as diagnosis, management or On-Line Reconfiguration (OLR) commands and responses. Control traffic is multiplexed with user traffic.

More specifically, the DSPs 110 are for encoding and modulating user and control traffic into downstream DMT symbols, and for de-modulating and decoding user and control traffic from upstream DMT symbols.

The following transmit steps are typically performed within the DSPs 110:

- data encoding, such as data multiplexing, framing, scrambling, error correction encoding and interleaving;
- signal modulation, comprising the steps of ordering the tones according to a tone ordering table, parsing the encoded bit stream according to the respective bit loadings of the ordered tones, and mapping each chunk of bits onto an appropriate transmit constellation point (with respective carrier amplitude and phase), possibly with Trellis coding;
- signal scaling, such as power normalization, transmit PSD shaping and transmit gain scaling;
- Inverse Fast Fourier Transform (IFFT);
- Cyclic Prefix (CP) insertion; and
- time-windowing.

The following receive steps are typically performed within the DSPs 110:

- time-windowing and CP removal;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective bit loading, detecting the expected transmit constellation point and the corresponding transmit bit sequence, possibly with Trellis decoding, and re-ordering all the detected chunks of bits according to the tone ordering table; and
- data decoding, such as data de-interleaving, error correction decoding, de-scrambling, frame delineation and demultiplexing.

Some of these transmit or receive steps can be omitted, or some additional steps can be present, depending on the exact digital communication technology being used.

In order to estimate the various far-end channel couplings (FEXT) for crosstalk mitigation, pilot signals need to be inserted at one end of the MIMO channel while the induced interference is being measured at the other end of the MIMO channel. These pilot signals are transmitted synchronously across all the vectored lines during dedicated symbol periods, and are modulated with pilot sequences that are mutually orthogonal so as to determine the respective contributions of the various crosstalkers.

For instance, in the recommendation entitled "self-FEXT cancellation (vectoring) For Use with VDSL2 Transceivers", ref. G.993.5 (vectored VDSL2), and adopted by the International Telecommunication Union (ITU) in April 2010, the VDSL2 transceivers send pilot signals on selected tones of the SYNC symbols (aka pilot tones). The SYNC symbols occur periodically after 256 DATA symbols (i.e., every super frame), and are transmitted synchronously over all the vectored lines (super frame alignment). A similar technique has been adopted in G.9701 ITU recommendation (G.fast).

During the SYNC symbol periods, the receivers measure the interference induced into each and every pilot tone, or a subset thereof. For instance, vectored VDSL2 measures the so-called slicer error, which is defined as the error vector between the received and properly equalized frequency sample and the constellation point onto which this frequency sample is demapped. G.fast adds additional error measures, such as the raw receive samples comprising both the direct signal and the induced interference before channel equalization.

The DSPs 110 are thus configured to interleave downstream SYNC symbols along with the downstream DATA symbols conveying downstream traffic, and to measure the upstream interference while upstream SYNC symbols are being received.

The DSPs 110 are further configured to supply transmit frequency samples to the VPU 150 before Inverse Fast Fourier Transform (IFFT) for joint signal precoding, and to supply receive frequency samples to the VPU 150 after Fast Fourier Transform (FFT) for joint signal postcoding.

The DSPs 110 are further configured to receive pre-compensated transmit frequency samples from the VPU 150 for further transmission, and to receive post-compensated receive frequency samples from the VPU 150 for further detection. Alternatively, the DSPs 110 may receive correction samples to add to the initial frequency samples before further transmission or detection.

The DSPs 130 only accommodate a small subset of the DSPs 110's features as the DSPs 130 do not support direct broadband communication, and thus do not encode nor modulate any payload data into downstream DMT symbols, and do not demodulate nor decode any payload data from upstream DMT symbols.

For downstream precoding, the pre-compensated frequency samples received from the VPU 120 for canceling the downstream crosstalk from the subscriber lines LINES_A into the subscriber lines LINES_B still need to be converted in the time and analog domain and transmitted through the line termination port 102 for further insertion over the subscriber lines LINES_B.

consequently, the DSPs 130 are configured to perform the following basic transmit steps with the pre-compensation samples received from the VPU 150 and to be transmitted through the line termination ports 102:

- Inverse Fast Fourier Transform (IFFT);
- Cyclic Prefix (CP) insertion; and
- time-windowing.

For upstream postcoding, the signal samples received through the line termination ports 102 from the respective subscriber lines LINES_B still need to be converted in the digital and frequency domain, and supplied to the VPU 150 for canceling the upstream crosstalk from the subscriber lines LINES_B into the subscriber lines LINES_A.

consequently, the DSPs 130 are configured to perform the following basic receive steps:

- time-windowing and CP removal; and
- Fast Fourier Transform (FFT).

The receive frequency samples are then supplied to the VPU 150 for joint signal postcoding.

The DSPs 130 are further configured to generate SYNC symbols along with the downstream DATA symbols (comprising pre-compensation signals only) in order to characterize the direct coupling path from the line termination ports 102 down to the respective CPEs CPES_B as it will be set forth further in the description, and to measure the upstream interference while upstream SYNC symbols are being received.

The VPU 150 is configured to mitigate the downstream crosstalk induced by the subscriber lines LINES_A into all the vectored lines $L_1$ to $L_N$, and to mitigate the upstream crosstalk induced by all the vectored lines $L_1$ to $L_N$ into the subscriber lines LINES_A.

The VPU 150 comprises a linear precoder configured to multiply a vector $\mathbf{u}_k$ of transmit frequency samples with a precoding matrix $\mathbf{P}_k$ in order to pre-compensate an estimate of the expected crosstalk, and a linear postcoder configured to multiply a vector of receive frequency samples $\mathbf{y}_k$ with a postcoding matrix $\mathbf{Q}_k$ so as to post-compensate an estimate of the incurred crosstalk. In the matrix $\mathbf{P}_k$ or $\mathbf{Q}_k$, a row i is associated with a particular victim line $L_i$, while a column j is associated with a particular disturber line $L_j$. It is noteworthy that, during DATA symbol periods, the VPU 150 is input with null transmit frequency samples for the lines LINES_B, and that the VPU 150 outputs null receive frequency samples for the lines LINES_B.

The VCU 160 is basically for controlling the operation of the VPU 150, and more specifically for estimating the crosstalk couplings or residual crosstalk couplings between the respective subscriber lines of the vectoring group, and for updating the coefficients of the precoding matrix $\mathbf{P}_k$ and of the postcoding matrix $\mathbf{Q}_k$ from the so-estimated crosstalk couplings or residual crosstalk couplings.

The VCU 160 starts first by configuring the transceivers 110 with the respective downstream pilot sequences to use for modulation of the downstream SYNC symbols, and by configuring the CPEs CPE_A with the respective upstream pilot sequences to use for modulation of the upstream SYNC symbols. The pilot sequences comprises L pilot digits using {-1, +1} (Vectored VDSL2) or {-1; 0; +1} (G.fast) as alphabet. The downstream and upstream pilot sequences may be of different lengths. The pilot digit that modulates a given tone k during SYNC symbol period t over line $L_n$ is denoted as $W_{n,k}^t$.

Presently, the VCU 160 configures the $N_A$ transceivers 110 with respective downstream pilot sequences $\left\{ W_{n,k}^t \right\}_{n=1..N_A, \, t=t_0 \cdots t_0+L-1, \, k=DS}$ to use during downstream SYNC symbol periods to up to $t_0+L-1$; and the VCU 160 configures the $N_A$ CPEs CPE_A with respective upstream pilot sequences $\left\{ W_{n,k}^t \right\}_{n=1..N_A, \, t=t_1 \cdots t_1+L-1, \, k=US}$ to use during upstream SYNC symbol periods $t_1$ up to $t_1+L-1$.

Next, the VCU 160 gathers downstream error samples as measured by the CPEs CPES_A and CPES_B while the downstream SYNC symbols are being transmitted, and upstream error samples as measured by the transceivers 110 and 130 while the upstream SYNC symbols are being transmitted. The error sample as measured over a victim line

$L_i$ at tone k during pilot symbol position t is denoted as $e^t_{i,k}$ .

Presently, the VCU 160 receives the downstream errors samples $\{e^t_{n,k}\}_{n=1..NA,\ t=t_0\cdots t_0+L-1,\ k=DS}$ as measured during the downstream SYNC symbol periods to up to $t_0+L-1$ over the subscriber lines LINES_A from the CPEs CPES_A through the peer transceiver 110; the VCU 160 receives the downstream errors samples $\{e^t_{n,k}\}_{n=NA+1..N,\ t=t_0\cdots t_0+L-1,\ k=DS}$ as measured during the downstream SYNC symbol periods to up to $t_0+L-1$ over the subscriber lines LINES_B from the peer access node AN_B through the communication port 103 and the communication agent 170; and the VCU 160 receives the upstream errors samples $\{e^t_{n,k}\}_{n=1..NA,\ t=t_1\cdots t_1+L-1,\ k=US}$ and $\{e^t_{n,k}\}_{n=NA+1..N,\ t=t_1\cdots t_1+L-1,\ k=US}$ as measured during the upstream SYNC symbol periods $t_1$ up to $t_1+L-1$ over the subscriber lines LINES_A and LINES_B from the transceivers 110 and 130 respectively.

In a last step, the VCU 160 correlates the L measurement samples $\{e^t_{i,k}\}$ as measured over a given victim line $L_i$ during a complete acquisition cycle with the L pilot digits $\{w^t_{j,k}\}$ modulating the pilot signal transmitted over a given disturber line $L_j$ so as to obtain (after power normalization) an estimate of the crosstalk coupling (if the SYNC symbols are not jointly processed through the VPU 150) or of the residual crosstalk coupling (if the SYNC symbols are jointly processed through the VPU 150) from the disturber line $L_j$ into the victim line $L_i$ at frequency index k. As the pilot sequences are mutually orthogonal, the contributions from the other disturber lines reduce to zero after this correlation step.

For a first-order update of the precoding and postcoding matrices , the VCU 160 needs at least to characterize the downstream coupling coefficients from the lines LINES_A into both the lines LINES_A and LINES_B, and the upstream coupling coefficients from both the lines LINES_A and LINES_B into the lines LINES_A. So the VCU 160 correlates the L downstream error samples $\{e^t_{n,k}\}_{n=1..NA,\ t=t_0\cdots t_0+L-1,\ k=DS}$ and $\{e^t_{n,k}\}_{n=NA+1..N,\ t=t_0\cdots t_0+L-1,\ k=DS}$ as measured over the lines LINES_A and LINES_B respectively with the L pilot digits $\{w^t_{n,k}\}_{n=1..NA,\ t=t_0\cdots t_0+L-1,\ k=DS}$ modulating the downstream pilot signals transmitted over the lines LINES_A in order to obtain the downstream coupling coefficients from the lines LINES_A into the lines LINES_A and LINES_B. Likewise, the VCU 160 correlates the L upstream error samples $\{e^t_{n,k}\}_{n=1..NA,\ t=t_1\cdots t_1+L-1,\ k=DS}$ as measured over the lines LINES_A with the L pilot digits $\{w^t_{n,k}\}_{n=1..NA,\ t=t_1\cdots t_1+L-1,\ k=US}$ and $\{w^t_{n,k}\}_{n=NA+1..N,\ t=t_1\cdots t_1+L-1,\ k=US}$ modulating the upstream pilots signals over the lines LINES_A and LINES_B in order to obtain the upstream coupling coefficients from the lines LINES_A and LINES_B respectively into the lines LINES_A. The pilot sequences $\{w^t_{n,k}\}_{n=NA+1..N}$, that are used for modulating the upstream pilot signals transmitted over the lines LINES_B during the upstream SYNC symbol periods $t_1$ up to $t_1+L-1$, as well as the respective transmit power gains $\{\sigma^2_{n,k}\}_{n=NA+1..N,\ k=US}$ used for the upstream pilot signals, are received from the peer access node AN_B through the communication port 103 and the communication agent 170.

Likewise, the VCU 160 sends the following pieces of information to the peer access node AN_B through the the communication agent 170 and the communication port 103 for characterization of the downstream crosstalk couplings from the lines LINES_B into the lines LINES_A, and for characterization of the upstream crosstalk couplings from the lines LINES_A into the lines LINES_B:

- downstream errors samples $\{e^t_{n,k}\}_{n=1..NA,\ t=t_2\cdots t_2+L-1,\ k=DS}$ as measured during downstream SYNC symbol periods $t_2$ up to $t_2+L-1$ over the subscriber lines LINES_4;

- pilot sequences $\{w^t_{n,k}\}_{n=1..NA,\ t=t_3\cdots t_3+L-1,\ k=US}$ that are used for modulating the upstream pilot signals transmitted over the lines LINES_A during upstream SYNC symbol periods $t_3$ up to $t_3+L-1$; and

- the respective transmit power gains $\left\{\sigma_{n,k}^2\right\}_{n=1..NA,\,k=US}$ that are used for the upstream pilot signals.

The VCU 160 also configures the $N_B$ transceivers 130 with $N_B$ respective downstream pilot sequences $\left\{W_{n,k}^t\right\}_{n=NA+1..N,\,t=t_0\cdots t_0+L-1,\,k=DS}$ to use during the downstream SYNC symbol periods $t_0$ up to $t_0+L-1$. These pilot sequences are needed to characterize the direct coupling path from the unassigned ports 102 up to the CPEs CPE_B, and further to adjust the precoding coefficients of the VPU 150 accordingly. Indeed, the pre-compensation signals $C'_B$ transmitted through the unassigned ports 102 travel through a different path and thus incur a different phase shift and possibly a different attenuation (especially in case of asymmetric coupling) than the direct signals $D_B$ transmitted from the access node AN_B: one thus need to adjust the precoding coefficients in order to compensate for this path difference. The downstream transmit power levels $\left\{\sigma_{n,k}^2\right\}_{n=NA+1..N,\,k=DS}$ used over the lines LINES_B shall be known to the access node AN_A for determining the precoder adjustment.

For higher-order update of the precoding and postcoding matrices, full characterization of the downstream and upstream channel matrix is required, and thus additional pieces of information may be exchanged through the communication port 103 between the access nodes AN_A and AN_B.

The access nodes AN_A and AN_B further exchange timing information timing_info through the communication port 103 or through a dedicated analog port for time-alignment of the downstream transmit DMT symbols and of the downstream transmit super-frames across the access nodes and respective subscriber lines. The received upstream DMT symbols are then time-aligned with the transmit downstream DMT symbols at the line termination ports 101 and 102 by applying respective timing-advance values at the CPEs CPE_A and CPE_B; and so are the received upstream super-frames with respect to the transmit downstream super-frames. Transmission of the DMT symbols and of the SYNC symbols is then fully synchronized over the whole vectoring group, including the additional unassigned line termination ports.

Typically, one of the access node, e.g. the access node AN_A, acts as a master and supplies the transmit DMT symbol clock and the super-frame clock to the peer access node acting as a slave, e.g. the access node AN_B, for the latter to synchronize the transmission of the DMT symbols and of the SYNC symbols over its subscriber lines, e.g. the lines LINES_B.

The access nodes AN_A and AN_B may further exchange the length of their respective pilot sequences, namely $L_A$ and $L_B$, in order to determine a common pilot length L as being greater than the sum $L_A + L_B$. During $L_A$ given SYNC symbol periods, the access node AN_A transmits pilot signals modulated with its own pilot sequences of length $L_A$ designed to be orthogonal to a constant pilot sequence of length $L_A$, while the access node AN_B transmits pilot signals modulated with the constant pilot sequence of length $L_A$; and the other way around, during $L_B$ given SYNC symbol periods, the access node AN_B transmits pilot signals modulated with its own pilot sequences of length $L_B$ designed to be orthogonal to a constant pilot sequence of length $L_B$ while the access node AN_A transmits pilot signals modulated with the constant pilot sequence of length $L_B$. By so doing, the orthogonality of the pilot sequences is preserved across the access nodes AN_A and AN_B. The $L_A$ and $L_B$ corresponding SYNC symbol periods can be consecutive SYNC symbol periods or interleaved SYNC symbol periods.

The access nodes AN_A and AN_B may further exchange the identity of the update algorithm that shall be used to update their respective precoding or postcoding matrix, as well as the respective values of the algorithm parameters if any (not shown).

The communication agent 170 is configured to establish a bi-directional communication channel with one or more peer access nodes in order to exchange vectoring control data. The vectoring control data received from any of the peer access nodes are forwarded to the VCU 160 for further handling, and the vectoring control data received from the VCU 160 are forwarded to the appropriate peer access node for further handling.

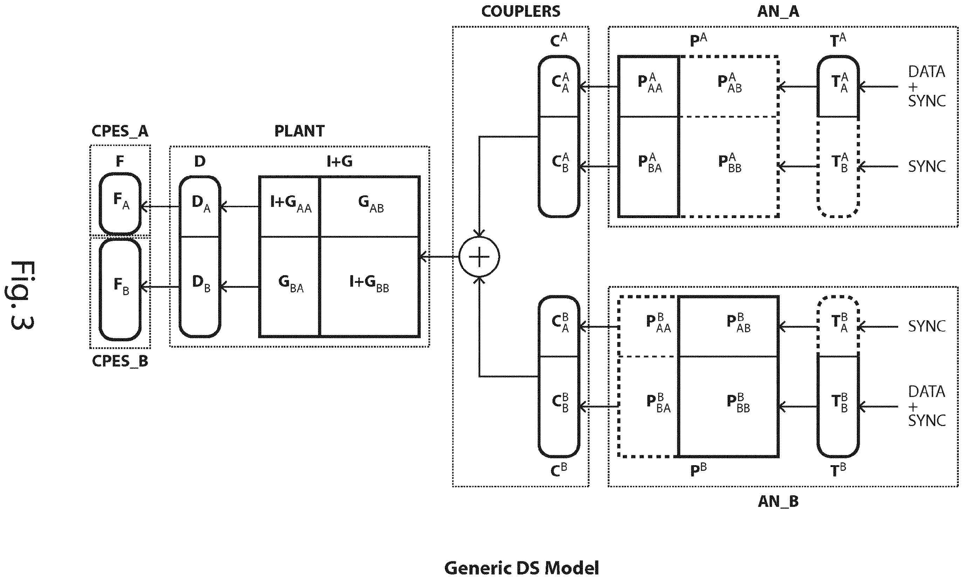

The adjustment of the respective precoders and postcoders within the access nodes AN_A and AN_B will now be explained with regard to fig. 3 to 6.

Let us first consider the generic downstream model depicted in fig. 3.

The end-to-end channel for the access node AN_A consists of an operator specific portion $\mathbf{C}^A\mathbf{P}^A\mathbf{T}^A$ from the data generation point to the couplers, and a shared portion FD(I+G) from the couplers to the CPEs CPES_A and CPES_B. The matrices are defined as follows:

- $\mathbf{T}^A$: NxN diagonal matrix of transmit gains in the access node AN_A;
- $\mathbf{P}^A$: NxN precoder in the access node AN_A;

- **$C^A$**: NxN diagonal matrix of gains from the access node AN_A output to the coupler outputs;
- **G**: NxN relative crosstalk channel in the shared outside plant;
- **D**: NxN diagonal matrix of direct gains in the shared outside plant; and
- **F**: NxN diagonal matrix representing the frequency domain equalizers of the CPEs APES_4 and CPES_B.

Similar notation applies for the path $C^B P^B T^B$ specific to the access node AN_B. Diagonal matrices are indicated by rounded corners, and full matrices by square corners. while the coupling paths $C^A$ and $C^B$ are shown as diagonal matrices for simplicity, they may as well be written as full matrices with crosstalk terms.

Let us organize the respective matrices with respect to the sets of lines LINES_A and LINES_B as shown in fig. 3. For instance, the precoding matrix $P^A$ of the access node AN_A is split into sub-matrices $P_{AA}^A$, $P_{AB}^A$, $P_{BA}^A$, and $P_{BB}^A$. Let X denote the union of sets LINES_A and LINES_B, so that for example $P_{XA}^A$ denotes the vertical concatenation of $P_{AA}^A$ and $P_{BA}^A$.

The main objective of the access node AN_A is to determine the $NxN_A$ precoder $P_{XA}^A$ that is used to precode the downstream DATA and SYNC samples intended for CPEs CPES_A while guaranteeing as little crosstalk as possible for the CPEs CPES_A and CPES_B. To assist in the process of obtaining and maintaining this primary precoder $P_{XA}^A$, the access node AN_A also determines an $NxN_B$ auxiliary precoder $P_{XB}^A$ that will be trained with SYNC samples only. These two precoders together form a precoder $P^A$, which is the inverse of the exposed end-to-end channel $T^A FD(I+G)C^A$. By exposed channel, we mean a channel with the transmit gains shifted to the end in order to "expose" the precoder on the right side.

Assuming that the pilot sequences used by the access node AN_A are orthogonal to the pilot sequences used by the access node AN_B, the access node AN_A can use error feedback received from the CPEs CPES_A and CPES_B to estimate the exposed end-to-end channel and thus obtain and maintain its precoder $P^A$ using usual procedures for joining, leaving, and tracking. In systems using decision-based error feedback, the transmit gains $T_B^A$ used by the access node AN_A to transmit pilot signals intended for the CPEs CPES_B must be small enough to avoid affecting their slicer decisions.

The precoder $P_{XB}^A$ and associated gains $T_B^A$ are depicted with dotted lines in fig. 3 to signify that these components are used for SYNC symbols only, and not for DATA symbols. Since SYNC symbols are periodic rather than random, and since SYNC symbols are typically sent orders of magnitude less frequently than DATA symbols, the signal processing requirements of these elements are much lower than the requirements of $P_{XA}^A$ and $T_A^A$. For example, conceivably the precoded pilot signals could be precalculated by the VCU 160 and fed to the VPU 150 as needed, rather than being computed on the fly within the VPU 150 as for the DATA symbols.

In this scheme, note that effectively 2N pilot sequences are needed, so crosstalk estimation time is proportional to 2N.

The precoder can be refined using a multiplicative update technique as described in the US patent application entitled "*Multiplicative Updating of Precoder or Postcoder Matrices for Crosstalk Control in a communication system*", and published in August 2012 with publication number US20120195183.

Correlating error feedback from the CPEs CPES_A and CPES_B with the pilot sequences sent by the access node AN_A, one obtains an estimate of the raw residual crosstalk error:

$$\widetilde{E}^A = FD(I+G)C^A P^A T^A - I \quad (2).$$

We normalize by the transmit power to get the exposed residual crosstalk error:

$$E^A = T^A \widetilde{E}^A (T^A)^{-1} = T^A FD(I+G)C^A P^A - I = \Theta^A P^A - I \quad (3).$$

If the precoder is updated by the multiplicative rule:

$$\mathbf{P}^{A}[t+1]=\mathbf{P}^{A}[t](\mathbf{I}-\mathbf{E}^{A}[t]) \quad (4),$$

then the new residual crosstalk error is:

$$\begin{aligned}
\mathbf{E}^{A}[t+1] &= \mathbf{\Theta}^{A}\mathbf{P}^{A}[t+1]-\mathbf{I} \\
&= \mathbf{\Theta}^{A}\mathbf{P}^{A}[t](\mathbf{I}-\mathbf{E}^{A}[t])-\mathbf{I} \\
&= (\mathbf{I}+\mathbf{E}^{A}[t])(\mathbf{I}-\mathbf{E}^{A}[t])-\mathbf{I} \\
&= -(\mathbf{E}^{A}[t])^{2} \quad\quad (5).
\end{aligned}$$

The sequence of error matrices defined in this way converges rapidly to zero, as long as the initial error $\mathbf{E}^{A}[0]$ has norm significantly less than 1.

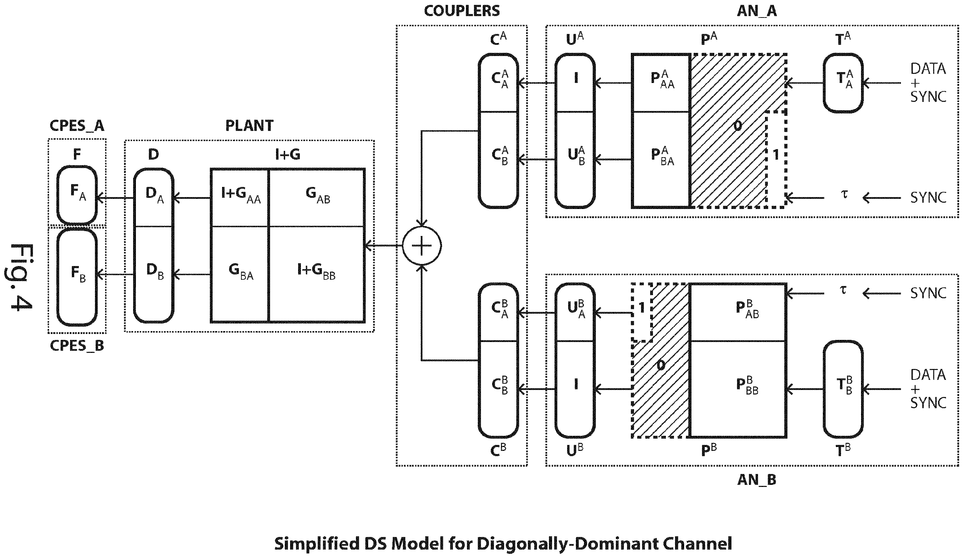

In diagonally dominant systems, a simplified architecture can be used to avoid the need for a full NxN precoder in each access node, and to reduce the number of pilot sequences needed from 2N to $(N_A+1)+(N_B+1) = N+2$. The simplified downstream model for this system is depicted in fig. 4.

The auxiliary precoder $\mathbf{P}^{A}_{XB}$ and associated gains $\mathbf{T}^{A}_{B}$ are removed, replaced by a capability to add copies of a single pilot sequence, multiplied by a scaling factor $\tau$, to each of the precoder output ports coupled to the lines LINES_B (see the **1** column vector in the precoding matrix $\mathbf{P}^{A}$ in fig. 4). This single pilot sequence is called the coupling sequence because, as will become clear, its purpose is determine the ratio of the coupling factors $\mathbf{C}^{A}_{B}$ and $\mathbf{C}^{B}_{B}$.

Of course, distinct pilot sequences may be used as well for the unassigned ports, in which case the identity matrix I would substitute for the sub-matrix $\mathbf{P}_{BB}$.

Fig. 4 also shows that we have added an additional diagonal block $\mathbf{U}^{A}$ in the access node AN_A, which multiplies the precoded signals destined for the lines LINES_B by complex factors $\mathbf{U}^{A}_{B}$, while not affecting the precoded signals destined for the lines LINES_A, i.e. $\mathbf{U}^{A}_{A}=\mathbf{I}$. The purpose of the matrix $\mathbf{U}^{A}$ is to compensate for the path differences leading up to the merge point. In particular, we will want to set $\mathbf{U}^{A}_{B}=(\mathbf{C}^{A}_{B})^{-1}\mathbf{C}^{B}_{B}$ so that $(\mathbf{C}^{A}_{B})\mathbf{U}^{A}_{B}=(\mathbf{C}^{A}_{B})(\mathbf{C}^{A}_{B})^{-1}\mathbf{C}^{B}_{B}=\mathbf{C}^{B}_{B}$. Assuming a similar compensation $\mathbf{U}^{B}_{A}=(\mathbf{C}^{B}_{A})^{-1}\mathbf{C}^{A}_{A}$ performed by the access node AN_B, we can thus obtain a symmetric system in which both access nodes experience the same channel from the output of their precoder onwards.

Before proceeding further, we note that the separation of the precoder into two terms $\mathbf{U}^{A}$ and $\mathbf{P}^{A}$ is a control path concept managed by the VCU 160 that does not necessarily need to be implemented in the data path. While the VCU 160 will estimate and update $\mathbf{U}^{A}$ and $\mathbf{P}^{A}$ separately, the VPU 150 can be implemented as a single precoder with coefficients given by $\mathbf{U}^{A}\mathbf{P}^{A}$. In this implementation, the VPU 150 of the access node AN_A needs to implement a Nx($N_A+1$) precoder, and the VPU of the access node AN_B needs to implement a Nx($N_B+1$) precoder.

We now describe the method used in this first-order model to determine the appropriate coefficients for $\mathbf{U}^{A}$. By sending the coupling sequence on the access node AN_A and correlating it against error feedback received from the CPEs CPES_B, we can estimate the direct end-to-end channel experienced by the coupling sequence, namely the $N_B$x1 vector:

$$\mathbf{r}^{A}_{BC}=\mathbf{F}_{B}\mathbf{D}_{B}(\mathbf{I}+\mathbf{G}_{BB})\mathbf{C}^{A}_{B}\mathbf{U}^{A}_{B}\mathbf{1}\tau \approx \tau\mathbf{F}_{B}\mathbf{D}_{B}\mathbf{C}^{A}_{B}\mathbf{U}^{A}_{B}\mathbf{1} \quad (6),$$

where the approximation is based on the diagonal dominance of the channel.

The FEQ coefficients $\mathbf{F}_{B}$ are selected by the CPEs CPES_B such that the diagonal values of the end-to-end channel experienced by the data sent from the access node AN_B are unity. This $N_B$x$N_B$ channel is given by:

$$\mathbf{R}_{BB}^{B}=\mathbf{F}_{B}\mathbf{D}_{B}(\mathbf{I}+\mathbf{G})_{BX}\mathbf{C}^{B}\mathbf{U}^{B}\mathbf{P}_{XB}^{B}\mathbf{T}_{B}^{B}\quad(7).$$

Assuming diagonal dominance of the channel, and hence also of the precoder $\mathbf{P}_{XB}^{B}$, we have:

$$\mathrm{diag}\{\mathbf{R}_{BB}^{B}\}=\mathbf{F}_{B}\mathbf{D}_{B}\mathbf{C}_{B}^{B}\mathbf{T}_{B}^{B},$$

and hence:

$$\mathbf{F}_{B}=(\mathbf{D}_{B}\mathbf{C}_{B}^{B}\mathbf{T}_{B}^{B})^{-1}\quad(8).$$

Substituting back into the expression for the coupling sequence channel, we then have:

$$\mathbf{r}_{BC}^{A}\approx\tau(\mathbf{T}_{B}^{B})^{-1}(\mathbf{C}_{B}^{B})^{-1}\mathbf{C}_{B}^{A}\mathbf{U}_{B}^{A}\mathbf{1}\quad(9).$$

We can drive $\mathbf{U}_{B}^{A}$ to it's desired value $\mathbf{U}_{B}^{A}=(\mathbf{C}_{B}^{A})^{-1}\mathbf{C}_{B}^{B}$ by the update equation:

$$\mathbf{U}_{B}^{A}[t+1]=\tau(\mathbf{T}_{B}^{B})^{-1}\mathrm{diag}\{\mathbf{r}_{BC}^{A}\}^{-1}\mathbf{U}_{B}^{A}[t]\quad(10).$$

Once this correct value of $\mathbf{U}_{B}^{A}$ is in place, the direct gains into the CPEs CPES_B is the same from the output of $\mathbf{P}_{BA}^{A}$ on the access node AN_A as it is from the output of $\mathbf{P}_{BB}^{B}$ on the access node AN_B. Hence the CPEs CPES_B use FEQ coefficients that correctly normalize the direct channels from both access nodes.

This means that a certain normalized channel defined as $\Theta^{A}=\mathbf{TFD(I+G)C}^{A}\mathbf{U}^{A}$ to the left of the precoder $\mathbf{P}^{A}$ is of the form $\Theta=\mathbf{I}+\tilde{\mathbf{G}}$ for some small matrix $\tilde{\mathbf{G}}$. Here, $\mathbf{T}$ is the NxN diagonal matrix with sub-blocks $\mathbf{T}_{A}^{A}$ and $\mathbf{T}_{B}^{B}$. As a result, first order update algorithms applied to $\mathbf{P}_{XA}^{A}$ by the access node AN_A will converge to the columns of the desired inverse precoder.

Due to the approximations used to derive the value $\mathbf{U}_{B}^{A}$, the coupling factors are not perfectly compensated, meaning that $\tilde{\mathbf{G}}$ will have non-zero diagonal elements. However, as long as these errors are small enough to keep the spectral radius of $\tilde{\mathbf{G}}$ smaller than one, convergence is still obtained. Convergence is faster when $\tilde{\mathbf{G}}$ is smaller.

Let us look a the first-order (additive) update algorithm in more detail. Correlating the error feedback from the CPEs CPES_A and CPES_B with the $N_A$ pilot sequences sent by the access node AN_A through the $N_A$ ports assigned to the lines LINES_A (i.e., not including the coupling sequence), we obtain an estimate of the raw residual crosstalk error:

$$\tilde{\mathbf{E}}_{XA}^{A}=\mathbf{FD(I+G)C}^{A}\mathbf{U}^{A}\mathbf{P}_{XA}^{A}\mathbf{T}_{A}^{A}-\mathbf{I}_{XA}\quad(11).$$

We normalize by the transmit powers to get the exposed error:

$$\mathbf{E}_{XA}^{A}=\mathbf{T}\tilde{\mathbf{E}}_{XA}^{A}(\mathbf{T}_{A}^{A})^{-1}=\mathbf{TFD(I+G)C}^{A}\mathbf{U}^{A}\mathbf{P}_{XA}^{A}-\mathbf{I}_{XA}=\Theta^{A}\mathbf{P}_{XA}^{A}-\mathbf{I}_{XA}\quad(12).$$

If we then update the precoder by the additive rule:

$$\mathbf{P}_{XA}^{A}[t+1]=\mathbf{P}_{XA}^{A}[t]-\mathbf{E}_{XA}^{A}[t]\quad(13),$$

then the new residual crosstalk error is:

$$\mathbf{E}_{XA}^A[t+1]=\mathbf{\Theta}^A\mathbf{P}_{XA}^A[t+1]-\mathbf{I}_{XA}$$
$$=\mathbf{\Theta}^A\mathbf{P}_{XA}^A[t]-\mathbf{I}_{XA}-\mathbf{\Theta}^A\mathbf{E}_{XA}^A[t]$$
$$=-(\mathbf{\Theta}^A-\mathbf{I})\mathbf{E}_{XA}^A[t] \qquad (14).$$

The sequence of error matrices defined in this way converges rapidly to zero, as long as the end-to-end crosstalk channel $\tilde{\mathbf{G}}=\mathbf{\Theta}^A\text{-}\mathbf{I}$ has norm significantly less than 1.

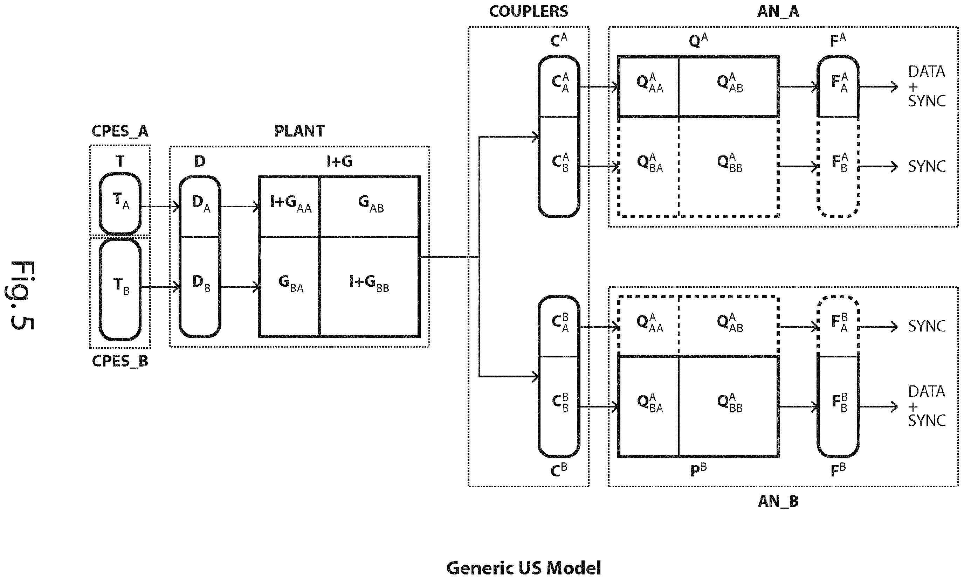

The generic channel model for upstream communication is depicted in fig. 5, which is essentially a mirror image of the downstream channel model depicted in fig. 3.

In this model, each access node receives a full set of N pilot sequences in order to estimate the full NxN channel. SYNC symbols are in general postcoded by an NxN postcoder, while if there are $N_A$ users on the access node AN_A, then DATA symbols only require a $N_A$xN postcoder.

The end-to-end channel for the access node AN_A consists of a shared part, $(\mathbf{I}+\mathbf{G})\mathbf{DT}$, and an operator specific portion, $\mathbf{F}^A\mathbf{Q}^A\mathbf{C}^A$, from the splitters up to the demapping function. The matrices are defined as follows:

- **T:** NxN diagonal matrix of transmit gains in CPEs;
- **D:** NxN diagonal matrix of direct gains in the shared outside plant;
- **G:** NxN relative crosstalk channel in the shared outside plant;
- $\mathbf{C}^A$: NxN diagonal matrix of gains from splitter inputs to the DFT outputs of the access node AN_A;
- $\mathbf{Q}^A$: NxN postcoder in the access node AN_A; and
- $\mathbf{F}^A$: NxN diagonal matrix representing the frequency domain equalizers in the access node AN_A.

Similar notation applies for the path $\mathbf{F}^B\mathbf{Q}^B\mathbf{C}^B$ specific to the access node AN_B. In the diagram, diagonal matrices are indicated by rounded corners, and full matrices by square corners. While the coupling paths $\mathbf{C}^A$ and $\mathbf{C}^B$ are shown as diagonal for simplicity, the methods also work if these are full matrices with crosstalk terms.

Let X denote again the union of sets A and B, so that for example $\mathbf{Q}_{AX}^A$ denotes the horizontal concatenation of $\mathbf{Q}_{AA}^A$ and $\mathbf{Q}_{AB}^A$. The main objective of the access node AN_A is to determine a "wide" $N_A$xN postcoder $\mathbf{Q}_{AX}^A$ that can be used to postcode data in the access node AN_A to ensure that this data is received unaffected by crosstalk from the CPEs CPES_A and CPES_B. To assist in the process of obtaining and maintaining this primary postcoder, the access node AN_A also determines an $N_B$xN auxiliary postcoder $\mathbf{Q}_{BX}^A$ that will be trained to decode the pilot sequences from the CPEs CPES_B into the access node AN_A, without causing crosstalk into the lines LINES_A and LINES_B. These two precoders together form a precoder $\mathbf{Q}^A$ which is the inverse of the exposed end-to-end channel $\mathbf{C}^A(\mathbf{I}+\mathbf{G})\mathbf{DTF}^A$. By exposed channel in the upstream direction, we mean a channel with the FEQ gains shifted to the right side to "expose" the postcoder on the left side. Assuming that the pilot sequences sent by the CPEs CPES_A and CPES_B are all mutually orthogonal, the access node AN_A can use the error measurements at the demapping point to estimate the exposed end-to-end channel and thus obtain and maintain its postcoder $\mathbf{Q}^A$ using usual procedures for joining, leaving, and tracking.

The postcoder $\mathbf{Q}_{BX}^A$ and associated FEQ coefficients $\mathbf{F}_B^A$ are depicted with dotted lines in fig. 5 to signify that these components are used for SYNC symbols only, and not for DATA symbols. Since SYNC symbols are typically sent orders of magnitude less frequently than data symbols, and only need to be processed when estimating the channel, the signal processing requirements of these elements are much lower than the requirements of $\mathbf{Q}_{AX}^A$ and $\mathbf{F}_A^A$. For example, conceivably the postcoding of the pilot signals could be performed by the vcu 160 off-line, rather than being computed on the fly within the VPU 150 as for the DATA symbols.

While 2N pilot sequences are needed for the downstream scheme in fig. 3, only N probe sequences are needed in the upstream.

The postcoder can be refined using a multiplicative update technique.

Correlating error measurements at the demapping point of the lines LINES_A and LINES_B in the access node AN_A with the pilot sequences sent by the CPEs CPES_A and CPES_B, one obtains an estimate of the raw residual crosstalk error:

$$\tilde{\mathbf{E}}^A = \mathbf{F}^A \mathbf{Q}^A \mathbf{C}^A (\mathbf{I}+\mathbf{G}) \mathbf{D}\,\mathbf{T}-\mathbf{I} \quad (15).$$

We normalize by the FEQ gains to get the exposed residual crosstalk error:

$$\mathbf{E}^A = (\mathbf{F}^A)^{-1} \tilde{\mathbf{E}}^A (\mathbf{F}^A) = \mathbf{Q}^A \mathbf{C}^A (\mathbf{I}+\mathbf{G}) \mathbf{D}\,\mathbf{T}\,\mathbf{F}^A - \mathbf{I} = \mathbf{Q}^A \boldsymbol{\Theta}^A - \mathbf{I} \quad (16).$$

If the precoder is updated by the multiplicative rule:

$$\mathbf{Q}^A[t+1] = (\mathbf{I}-\mathbf{E}^A[t])\mathbf{Q}^A[t] \quad (17),$$

then the new residual crosstalk error is:

$$\begin{aligned}
\mathbf{E}^A[t+1] &= \mathbf{Q}^A[t+1]\boldsymbol{\Theta}^A - \mathbf{I} \\
&= (\mathbf{I}-\mathbf{E}^A[t])\mathbf{Q}^A[t]\boldsymbol{\Theta}^A - \mathbf{I} \\
&= (\mathbf{I}-\mathbf{E}^A[t])(\mathbf{I}+\mathbf{E}^A[t]) - \mathbf{I} \\
&= -(\mathbf{E}^A[t])^2 \quad\quad (18).
\end{aligned}$$

The sequence of error matrices defined in this way converges rapidly to zero, as long as the initial error $\mathbf{E}^A[0]$ has norm significantly less than 1.

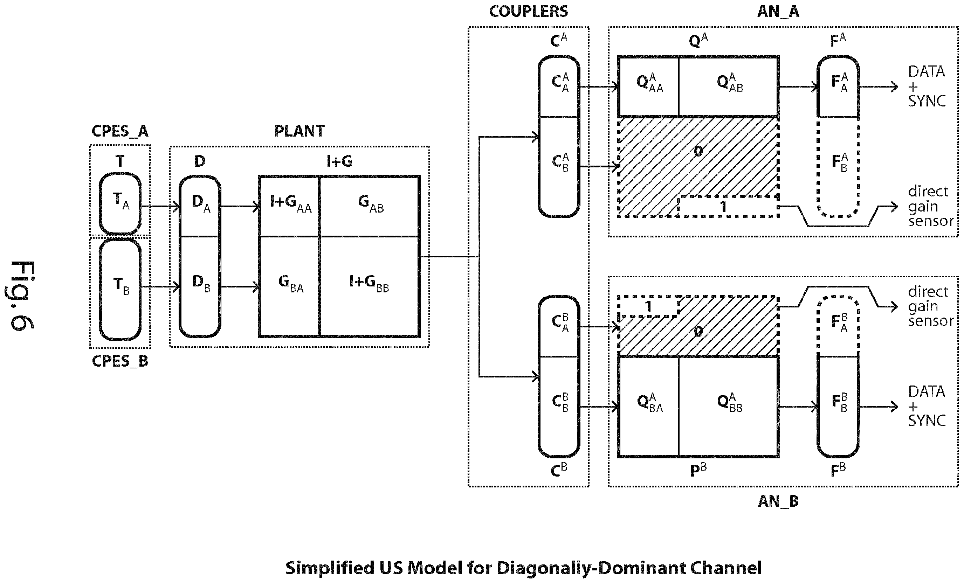

In diagonally dominant systems, a simplified architecture can be used to avoid the need for a full NxN postcoder in each access node, and simplify the coefficient update procedure. The model for this system is shown in fig. 6.

As illustrated in fig. 6, the auxiliary postcoder $\mathbf{Q}^A_{BX}$ is removed and replaced by a capability to report the sum of all postcoder inputs from the unassigned ports 102 (see the **1** row vector in the precoding matrix $\mathbf{Q}^A$ in fig. 6). This value is called the direct gain sensor because, as will become clear, its purpose is to determine the direct gains from the CPEs CPES_B and hence to train the "virtual" FEQ coefficients $\mathbf{F}^A_B$. These FEQ coefficients are needed to align the postcoder updates correctly, and can be computed by the VCU 160 or by one of the DSPs 130.

The advantage of this simplified implementation is that the VPU 150 of the access node AN_A only needs to implement a $(N_A+1)$xN postcoder, and the VPU of the access node AN_B only needs to implement a $(N_B+1)$xN postcoder.

Alternatively, the upstream pilot signals received through the unassigned ports can be individually detected and the corresponding error vector measured, in which case the identity matrix **I** would substitute for the sub-matrix $\mathbf{Q}_{BB}$.

We now describe the method used to determine the appropriate values for $\mathbf{F}^A_B$. By obtaining the direct gain sensor signal on the access node AN_A and correlating it against the pilot sequences used by the CPEs CPES_B, we can estimate the end-to-end channel into the sensor, namely the $1$x$N_B$ vector:

$$\mathbf{r}^A_{dB} = \mathbf{1}^\top \mathbf{C}^A_B (\mathbf{I}+\mathbf{G}_{BB}) \mathbf{D}_B \mathbf{T}_B \approx \mathbf{1}^\top \mathbf{C}^A_B \mathbf{D}_B \mathbf{T}_B \quad (19),$$

where the approximation is based on the assumed diagonal dominance of the channel. In normal operation, the lines LINES_B are not postcoded in the access node AN_A, and the FEQ coefficients should be $\mathbf{F}^A_B = (\mathbf{C}^A_B)^{-1} \mathbf{D}_B^{-1} \mathbf{T}_B^{-1}$. These values can be obtained, approximately, by setting:

$$\mathbf{F}^A_B = \mathrm{diag}\{\mathbf{r}^A_{dB}\}^{-1} \quad (20).$$

Now, assuming small crosstalk, the normalized channel $\Theta^A = \mathbf{C}^A(\mathbf{I}+\mathbf{G})\mathbf{DTF}^A$ has diagonal values close to unity, and is of the form $\Theta^A = \mathbf{I}+\tilde{\mathbf{G}}$ for some small matrix $\tilde{\mathbf{G}}$. As a result, first order update algorithms applied to $\mathbf{Q}^A_{AX}$ by the

access node AN_A will converge to the rows of the desired inverse postcoder.

Due to the approximations used to derive $\mathbf{F}_B^A$, the direct gains are not perfectly compensated, meaning that $\tilde{\mathbf{G}}$ will have non-zero diagonal elements. However, as long as these errors are small enough to keep the spectral radius of $\tilde{\mathbf{G}}$ smaller than one, convergence is still obtained. Convergence is faster when $\tilde{\mathbf{G}}$ is smaller.

Let us look at the first-order (additive) update algorithm in more detail.

Correlating error measurements at the demapping point of the lines LINES_A in the access node AN_A with the pilot sequences sent by the CPEs CPES_A and CPES_B, one obtains an estimate of the raw residual crosstalk error:

$$\tilde{\mathbf{E}}_{AX}^A = \mathbf{F}_A^A \mathbf{Q}_{AX}^A \mathbf{C}^A (\mathbf{I} + \mathbf{G}) \mathbf{D} \mathbf{T} - \mathbf{I}_{AX} \quad (21).$$

We normalize the raw error by the extended FEQ matrix to get the exposed error:

$$\mathbf{E}_{AX}^A = (\mathbf{F}_A^A)^{-1} \tilde{\mathbf{E}}_{AX}^A \mathbf{F}^A = \mathbf{Q}_{AX}^A \mathbf{C}^A (\mathbf{I} + \mathbf{G}) \mathbf{D} \mathbf{T} \mathbf{F}^A - \mathbf{I}_{AX} = \mathbf{Q}_{AX}^A \mathbf{\Theta}^A - \mathbf{I}_{AX} \quad (22).$$

If we then update the postcoder by the additive rule:

$$\mathbf{Q}_{AX}^A[t+1] = \mathbf{Q}_{AX}^A[t] - \mathbf{E}_{AX}^A[t] \quad (23),$$

then the new residual crosstalk error is:

$$\begin{aligned}
\mathbf{E}_{AX}^A[t+1] &= \mathbf{Q}_{AX}^A[t+1]\mathbf{\Theta}^A - \mathbf{I}_{AX} \\
&= (\mathbf{Q}_{AX}^A[t] - \mathbf{E}_{AX}^A[t])\mathbf{\Theta}^A - \mathbf{I}_{AX} \\
&= -\mathbf{E}_{AX}^A[t](\mathbf{\Theta}^A - \mathbf{I}) \quad (24).
\end{aligned}$$

The sequence of error matrices defined in this way converges rapidly to zero, as long as end to end residual crosstalk channel $\tilde{\mathbf{G}} = \Theta^A\text{-}\mathbf{I}$ has norm significantly less than 1.

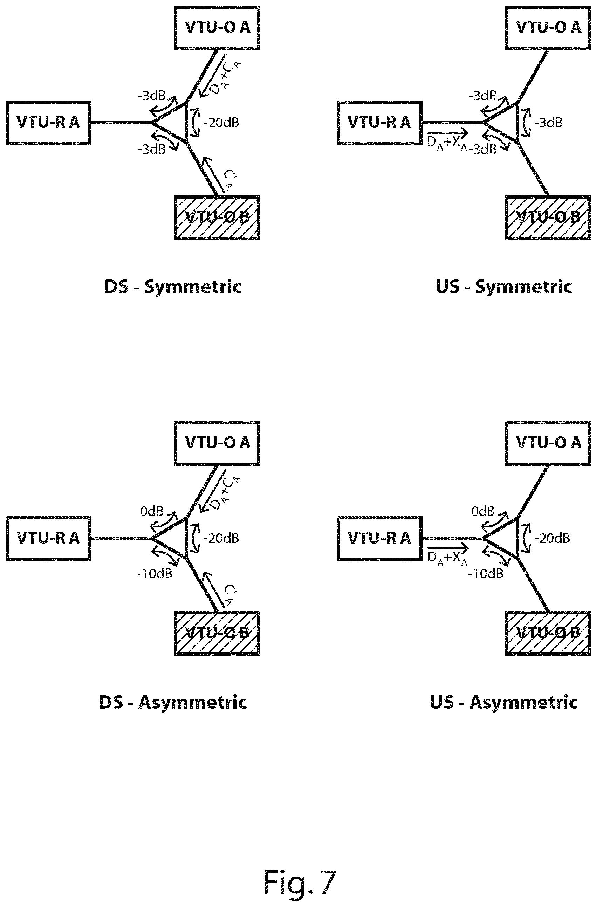

There is seen in fig. 7 different coupling schemes that can be used to connect the access nodes AN_A and AN_B to the same subscriber lines.

With symmetric couplers, the direct downstream communication signals $D_A$ along with the downstream pre-compensation signals $C_A$ transmitted by a transceiver VTU-O A of the access node AN_A are combined with the pre-compensation signals $C'_A$ transmitted by a transceiver VTU-O B of the peer access node AN_B, while incurring a $3_{dB}$ loss. The combined signals is then injected into the respective subscriber line, and is received by a transceiver VTU-R A at subscriber premises.

The signals transmitted by the transceiver VTU-O A also couple into the input of the transceiver VTU-O B (and the way around), but incur a substantially higher attenuation, presently a 20dB loss. Such a near-end coupling is not harmful as downstream and upstream communications do not take place within the same frequency band or within the same time period.

For upstream, the direct communication signals $D_A$ transmitted by the transceiver VTU-R A and impaired by some crosstalk signals $X_A$ is dispatched towards the transceivers VTU-O A and VTU-O B while incurring a 3dB loss.

With asymmetric couplers, the downstream communication and pre-compensation signals transmitted by the transceiver VTU-O A of the access node AN_A incur a lower path loss than the pre-compensation signals transmitted by the transceiver VTU-O B of the peer access node AN_B, presently 0dB versus 10dB loss. Thus, the transmit power of the direct communication signals is not altered. The precoder coefficients in the access node AN_B can be adjusted to compensate for this higher path loss (e.g., by means of the matrix $\mathbf{U}^B$ in the access node AN_B). As the pre-compensation signals $C'_A$ transmitted by the transceiver VTU-O B are typically low-power signals (at least for diagonally-dominant MIMO channels), such a signal boost shall be supported by current line drivers with any signal distortion.

For upstream, the direct communication signals $D_A$ transmitted by the transceiver VTU-R A and impaired by some crosstalk signals $X_A$ is dispatched towards the transceivers VTU-O A with a lower path loss than towards the transceiver VTU-O B, presently $0d_B$ versus $10d_B$ loss.

The present invention can be easily extended to SLU with 3 or more operators, yet requires analog couplers with additional input ports.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

**Claims**

1. **A method** for deploying broadband communication services over **an access plant** comprising:

    - coupling **one or more first subscriber lines** (LINES_A) of the access plant to respective **first line termination ports** (101) of **a first access node** (AN_A);
    - coupling **one or more second subscriber lines** (LINES_B) of the access plant to respective **second line termination ports** of **a second access node** (AN_B);
    - further coupling **third line termination ports** (103) of the first access node to the respective second subscriber lines,

    wherein the method further comprises, by the first access node, mitigating **first downstream crosstalk** caused by **first downstream communication signals** transmitted over the first subscriber lines and impairing **second downstream communication signals** transmitted over the second subscriber lines,
    and wherein the mitigation of the first downstream crosstalk comprises transmitting **first crosstalk pre-compensation signals** through the third line termination ports.

2. **A method** according to claim 1, wherein respective ones of the second line termination ports, respective ones of the third line termination ports, and respective ones of the second subscriber lines are coupled to each other by means of **analog couplers** (COUPLERS).

3. **A method** according to claim 2, wherein the analog couplers are symmetric couplers with high-isolation coupling paths between the second and third line termination ports, and with equal-attenuation coupling paths between the second line termination ports and the second subscriber lines and between the third line termination ports and the second subscriber lines.

4. **A method** according to claim 2, wherein the analog couplers are asymmetric couplers with high-isolation coupling paths between the second and third line termination ports, and with lower-attenuation coupling paths between the second line termination ports and the second subscriber lines than between the third line termination ports and the second subscriber lines.

5. **A method** according to claim 1, wherein the method further comprises provisioning **a communication port** at the first access node configured to receive **vectoring control data** from the second access node.

6. **A method** according to claim 5, *wherein* the vectoring control data comprise at least one of:

- **second downstream error samples** measured over the second subscriber lines while **first downstream pilot signals** are being transmitted over the first subscriber lines; and
- **timing information** (timing_info) for time-synchronization of symbols transmitted over the first and second subscriber lines.

7. **A method** according to claim 5, *wherein* the vectoring control data comprises **a second length** ($L_B$) of **second downstream pilot sequences** intended for modulation of **second downstream pilot signals** transmitted over the second subscriber lines,
*and wherein* the method further comprises modulating **first downstream pilot signals** transmitted over the first subscriber lines with **a first common downstream pilot sequence** having the second length while the second downstream pilot signals modulated with the second downstream pilot sequences are being transmitted over the second subscriber lines, the first common downstream pilot sequence and the second downstream pilot sequences being mutually orthogonal.

8. **A method** according to claim 1, *wherein* the first and second line termination ports are assigned to respective subscribers for broadband communication,
*and wherein* the third line termination ports are unassigned ports.

9. **A method** according to claim 1, *wherein* the method further comprises transmitting **third downstream pilot signals** through the third line termination ports for further adjustment of the mitigation of the first downstream crosstalk.

10. **A method** according to claim 1, *wherein* the first and second access nodes are deployed at different geographical locations along the access plant.

11. **An access node** (AN_A) for providing broadband communication services over **an access plant,** and comprising:

- **one or more first line termination ports** (101) to be coupled to respective **first subscriber lines** (LINES_A) of the access plant;
- **one or more third line termination ports** (102) to be coupled to respective **second subscriber lines** (LINES_B) of the access plant that are further coupled to respective **second line termination ports** of **a second access node** (AN_B),

*wherein* the access node further comprises **a vectoring processor** (150) coupled to the first and third line termination ports, and configured to mitigate **first downstream crosstalk** caused by **first downstream communication signals** transmitted over the first subscriber lines and impairing **second downstream communication signals** transmitted over the second subscriber lines,
*and wherein* the third line termination ports are configured to transmit **first crosstalk pre-compensation signals** generated by the vectoring processor for mitigation of the first downstream crosstalk.

12. **An access node** (AN_A) according to claim 11, *wherein* the access node is **a Digital Subscriber Line Access Multiplexer DSLAM.**

13. **An access node** (AN_A) according to claim 11, *wherein* the access node is **a Distribution Point Unit DPU.**

**Patentansprüche**

1. Verfahren zur Inbetriebsetzung von Breitband-Kommunikationsdiensten über eine Zugangsanlage, umfassend:

- Koppeln von einer oder mehreren ersten Teilnehmeranschlussleitungen (LINES_A) der Zugangsanlage mit jeweiligen ersten Leitungsabschlussports (101) eines ersten Zugangsknotens (AN_A);
- Koppeln von einer oder mehreren zweiten Teilnehmeranschlussleitungen (LINES_B) der Zugangsanlage mit jeweiligen zweiten Leitungsabschlussports eines zweiten Zugangsknotens (AN_B);
- weiteres Koppeln von dritten Leitungsabschlussports (103) des ersten Zugangsknotens mit den jeweiligen zweiten Teilnehmeranschlussleitungen,

wobei das Verfahren weiterhin, mittels des ersten Zugangsknotens, das Dämpfen eines ersten nachgelagerten Nebensprechens, das von ersten nachgelagerten Kommunikationssignalen verursacht wird, die über die ersten Teilnehmeranschlussleitungen übertragen werden, und das Behindern von zweiten nachgelagerten Kommunikationssignalen umfasst, die über die zweiten Teilnehmeranschlussleitungen übertragen werden, und wobei das Dämpfen des ersten nachgelagerten Nebensprechens das Übertragen von ersten Nebensprech-Vorkompensationssignalen über die dritten Leitungsabschlussports umfasst.

2. Verfahren nach Anspruch 1, wobei jeweilige der zweiten Leitungsabschlussports, jeweilige der dritten Leitungsabschlussports und jeweilige der zweiten Teilnehmeranschlussleitungen mittels analoger Koppler (COUPLERS) miteinander gekoppelt sind.

3. Verfahren nach Anspruch 2, wobei die analogen Koppler symmetrische Koppler mit hochisolierenden Kopplungspfaden zwischen den zweiten und dritten Leitungsabschlussports und mit gleichdämpfenden Kopplungspfaden zwischen den zweiten Leitungsabschlussports und den zweiten Teilnehmeranschlussleitungen und zwischen den dritten Leitungsabschlussports und den zweiten Teilnehmeranschlussleitungen sind.

4. Verfahren nach Anspruch 2, wobei die analogen Koppler asymmetrische Koppler mit hochisolierenden Kopplungspfaden zwischen den zweiten und dritten Leitungsabschlussports und mit geringer dämpfenden Kopplungspfaden zwischen den zweiten Leitungsabschlussports und den zweiten Teilnehmeranschlussleitungen sind als zwischen den dritten Leitungsabschlussports und den zweiten Teilnehmeranschlussleitungen.

5. Verfahren nach Anspruch 1, wobei das Verfahren weiterhin das Bereitstellen eines Kommunikationsports an dem ersten Zugangsknoten umfasst, der konfiguriert ist, Vektorisierungssteuerdaten von dem zweiten Zugangsknoten zu empfangen.

6. Verfahren nach Anspruch 5, wobei die Vektorisierungssteuerdaten mindestens eines umfassen aus:

   - zweiten nachgelagerten Fehlerabtastwerten, die über die zweiten Teilnehmeranschlussleitungen gemessen werden, während erste nachgelagerte Pilotsignale über die ersten Teilnehmeranschlussleitungen übertragen werden; und
   - Zeitsteuerungsinformationen (timing_info) für die Zeitsynchronisation von Symbolen, die über die ersten und zweiten Teilnehmeranschlussleitungen übertragen werden.

7. Verfahren nach Anspruch 5, wobei die Vektorisierungssteuerdaten eine zweite Länge ($L_B$) von zweiten nachgelagerten Pilotsequenzen umfassen, die zur Modulation von zweiten nachgelagerten Pilotsignalen vorgesehen sind, die über die zweiten Teilnehmeranschlussleitungen übertragen werden, und wobei das Verfahren weiterhin das Modulieren von ersten nachgelagerten Pilotsignalen, die über die ersten Teilnehmeranschlussleitungen übertragen werden, mit einer ersten gemeinsamen nachgelagerten Pilotsequenz, die die zweite Länge aufweist, umfasst, während die zweiten nachgelagerten Pilotsignale, die mit den zweiten nachgelagerten Pilotsequenzen moduliert werden, über die zweiten Teilnehmeranschlussleitungen übertragen werden, wobei die erste gemeinsame nachgelagerte Pilotsequenz und die zweiten nachgelagerten Pilotsequenzen zueinander orthogonal sind.

8. Verfahren nach Anspruch 1, wobei die ersten und zweiten Leitungsabschlussports jeweiligen Teilnehmeranschlüssen zur Breitbandkommunikation zugewiesen sind, und wobei die dritten Leitungsabschlussports nicht-zugewiesene Ports sind.

9. Verfahren nach Anspruch 1, wobei das Verfahren weiterhin das Übertragen von dritten nachgelagerten Pilotsignalen über die dritten Leitungsabschlussports zur weiteren Anpassung der Dämpfung des ersten nachgelagerten Nebensprechens umfasst.

10. Verfahren nach Anspruch 1, wobei der erste und zweite Zugangsknoten an unterschiedlichen geografischen Orten entlang der Zugangsanlage in Betrieb gesetzt werden.

11. Zugangsknoten (AN_A) zur Bereitstellung von Breitband-Kommunikationsdiensten über eine Zugangsanlage, und umfassend:

   - einen oder mehrere erste Leitungsabschlussports (101), die mit jeweiligen ersten Teilnehmeranschlussleitungen (LINES_A) der Zugangsanlage zu koppeln sind;
- einen oder mehrere dritte Leitungsabschlussports (102), die mit jeweiligen zweiten Teilnehmeranschlussleitungen (LINES_B) der Zugangsanlage zu koppeln sind, die weiter mit jeweiligen zweiten Leitungsabschlussports eines zweiten Zugangsknotens (AN_B) gekoppelt sind;

wobei der Zugangsknoten weiterhin einen Vektorisierungsprozessor (150) umfasst, der mit den ersten und dritten Leitungsabschlussports gekoppelt ist, und konfiguriert, erstes nachgelagertes Nebensprechen, das von ersten nachgelagerten Kommunikationssignalen verursacht wird, die über die ersten Teilnehmeranschlussleitungen übertragen werden, zu dämpfen und zweite nachgelagerte Kommunikationssignale, die über die zweiten Teilnehmeranschlussleitungen übertragen werden, zu behindern,
und wobei die dritten Leitungsabschlussports konfiguriert sind, erste Nebensprech-Vorkompensationssignale zu übertragen, die von dem Vektorisierungsprozessor zur Dämpfung des ersten nachgelagerten Nebensprechens erzeugt werden.

12. Zugangsknoten (AN_A) nach Anspruch 11, wobei der Zugangsknoten ein digitaler Teilnehmeranschluss-Zugangsmultiplexer DSLAM ist.

13. Zugangsknoten (AN_A) nach Anspruch 11, wobei der Zugangsknoten eine Verteilungspunkteinheit DPU ist.

**Revendications**

1. Procédé pour déployer des services de communication à large bande sur une installation d'accès comprenant les étapes suivantes :

   - coupler une ou plusieurs premières lignes d'abonné (LINES_A) de l'installation d'accès à des premiers ports de terminaison de ligne (101) respectifs d'un premier noeud d'accès (AN_A) ;
   - coupler une ou plusieurs secondes lignes d'abonné (LINES_B) de l'installation d'accès à des deuxièmes ports de terminaison de ligne respectifs d'un second noeud d'accès (AN_B) ;
   - coupler en outre des troisièmes ports de terminaison de ligne (103) du premier noeud d'accès aux secondes lignes d'abonné respectives,

   le procédé consistant en outre, au moyen du premier noeud d'accès, à atténuer une première diaphonie de liaison descendante due à des premiers signaux de communication de liaison descendante transmis sur les premières lignes d'abonné et à altérer des seconds signaux de communication de liaison descendante transmis sur les secondes lignes d'abonné,
   et dans lequel l'atténuation de la première diaphonie de liaison descendante comprend la transmission des premiers signaux de précompensation de diaphonie à travers les troisièmes ports de terminaison de ligne.

2. Procédé selon la revendication 1, dans lequel des ports de terminaison respectifs des deuxièmes ports de terminaison de ligne, des ports de terminaison respectifs des troisièmes ports de terminaison de ligne, et des lignes d'abonné respectives des secondes lignes d'abonné sont couplés les uns aux autres au moyen de coupleurs analogiques (COUPLEURS).

3. Procédé selon la revendication 2, dans lequel les coupleurs analogiques sont des coupleurs symétriques avec des voies de couplage de haute isolation entre les deuxièmes et troisièmes ports de terminaison de ligne, et avec des voies de couplage à atténuation égale entre les deuxièmes ports de terminaison de ligne et les secondes lignes d'abonné et entre les troisièmes ports de terminaison de ligne et les secondes lignes d'abonné.

4. Procédé selon la revendication 2, dans lequel les coupleurs analogiques sont des coupleurs asymétriques avec des voies de couplage de haute isolation entre les deuxièmes et troisièmes ports de terminaison de ligne, et avec des voies de couplage à atténuation plus faible entre les deuxièmes ports de terminaison de ligne et les secondes lignes d'abonné qu'entre les troisièmes ports de terminaison de ligne et les secondes lignes d'abonné.

5. Procédé selon la revendication 1, le procédé comprenant en outre la fourniture d'un port de communication au niveau du premier noeud d'accès configuré pour recevoir des données de commande de vectorisation à partir du second noeud d'accès.

**6.** Procédé selon la revendication 5, dans lequel les données de commande de vectorisation comprennent :

- des seconds échantillons d'erreur de liaison descendante mesurés sur les secondes lignes d'abonné alors que des premiers signaux pilotes de liaison descendante sont transmis sur les premières lignes d'abonné ; et/ou
- des informations de synchronisation (timing_info) pour la synchronisation temporelle de symboles transmis sur les premières et secondes lignes d'abonné.

**7.** Procédé selon la revendication 5, dans lequel les données de commande de vectorisation comprennent une seconde longueur ($L_B$) de secondes séquences pilotes de liaison descendante destinées à la modulation de deuxièmes signaux pilotes de liaison descendante transmis sur les secondes lignes d'abonné, et le procédé comprenant en outre la modulation des premiers signaux pilotes de liaison descendante transmis sur les premières lignes d'abonné avec une première séquence pilote de liaison descendante commune ayant la seconde longueur alors que les deuxièmes signaux pilotes de liaison descendante modulés avec les secondes séquences pilotes de liaison descendante sont transmis sur les secondes lignes d'abonné, la première séquence pilote de liaison descendante commune et les secondes séquences pilotes de liaison descendante étant mutuellement orthogonales.

**8.** Procédé selon la revendication 1, dans lequel les premiers et deuxièmes ports de terminaison de ligne sont attribués à des abonnés respectifs pour une communication à large bande, et dans lequel les troisièmes ports de terminaison de ligne sont des ports non attribués.

**9.** Procédé selon la revendication 1, le procédé comprenant en outre la transmission de troisièmes signaux pilotes de liaison descendante à travers les troisièmes ports de terminaison de ligne pour un ajustement ultérieur de l'atténuation de la première diaphonie de liaison descendante.

**10.** Procédé selon la revendication 1, dans lequel les premier et second noeuds d'accès sont déployés à différents emplacements géographiques le long de l'installation d'accès.

**11.** Noeud d'accès (AN_A) pour fournir des services de communication à large bande sur une installation d'accès, et comprenant :

- un ou plusieurs premiers ports de terminaison de ligne (101) devant être couplés à des premières lignes d'abonné (LINES_A) respectives de l'installation d'accès ;
- un ou plusieurs troisièmes ports de terminaison de ligne (102) devant être couplés à des secondes lignes d'abonné (LINES_B) respectives de l'installation d'accès qui sont en outre couplées à des deuxièmes ports de terminaison de ligne respectifs d'un second noeud d'accès (AN_B),

le noeud d'accès comprenant en outre un processeur de vectorisation (150) couplé aux premiers et troisièmes ports de terminaison de ligne, et configuré pour atténuer une première diaphonie de liaison descendante due aux premiers signaux de communication de liaison descendante transmis sur les premières lignes d'abonné et altérer des seconds signaux de communication de liaison descendante transmis sur les secondes lignes d'abonné, et dans lequel les troisièmes ports de terminaison de ligne sont configurés pour transmettre des premiers signaux de précompensation de diaphonie générés par le processeur de vectorisation pour atténuer la première diaphonie de liaison descendante.

**12.** Noeud d'accès (AN_A) selon la revendication 11, le noeud d'accès étant un multiplexeur d'accès de ligne d'abonné numérique DSLAM.

**13.** Noeud d'accès (AN_A) selon la revendication 11, le noeud d'accès étant une unité de point de distribution DPU.

Fig. 1

Fig. 2

Fig. 3

**Simplified DS Model for Diagonally-Dominant Channel**

Fig. 4

Fig. 5

Fig. 6

Simplified US Model for Diagonally-Dominant Channel

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110150057 A1

- US 20120195183 A

### Non-patent literature cited in the description

- self-FEXT cancellation (vectoring) For Use with VDSL2 Transceivers. *International Telecommunication Union (ITU),* April 2010